# EUROPEAN PATENT SPECIFICATION

(11) **EP 1 939 511 B1**
(45) Date of publication and mention of the grant of the patent: **21.03.2012**
(21) Application number: 07024224.3
(22) Date of filing: 13.12.2007
(51) Int. Cl.: F16L 19/08

(54) **Sleeve joint for connection of plumbing pipes with threaded ends**
Muffenverbindung für mit Gewinde versehenen Installationsleitungen
Joint à manchon pour la connexion de conduites sanitaires avec filetage

(30) Priority: 14.12.2006 IT vi20060355
(43) Date of publication of application: 02.07.2008
(73) Proprietor: MASTROMATTEO, Ciro, I-36043 Camisano VIC. (IT)
(72) Inventor: Mastromatteo, Ciro, 36013 Camisano Vicentino (IT)
(74) Representative: Autuori, Angelo

(56) References cited:
- EP-A1- 0 611 909
- FR-A1- 2 689 205
- GB-A- 895 461
- US-A- 3 367 684
- US-A- 4 406 483
- US-A1- 2004 137 778
- US-A1- 2006 244 258

## Description

### Field of the invention

The present invention finds application in the field of plumbing, and particularly relates to a sleeve joint for connection of plumbing pipes with threaded ends. More particularly, the sleeve joint according to the invention allows connection of smooth pipes, of either plastic or metal material, to threaded ends.

### Background of the invention

Pipes having smooth outer surfaces are known which can be coupled for connection to threaded ends of plumbing systems using a ring nut having internal threads to be screwed onto the external threads of the end.

Also, fluid tightness and mechanical holding are known to be ensured by fitting a suitable sleeve joint between the ring nut and the threaded end.

One example of such prior art sleeve joint is disclosed in European patent EP-B1-0467299. Particularly this joint has a main tubular body of elastomeric material, which is integrally joined to an annular member having a plurality of circumferential ridges for anchorage thereof to the outer surface of the pipe.

One drawback of this known solution is that, when these ridges are pressed onto the outer surface of the pipe, they cut the same over the whole circumference inducing a weakening effect and exposing the pipe to risks of failure.

Furthermore, the ridges do not ensure a proper mechanical coupling between the pipe and the sleeve joint. As a result, undesired torsional slip motions may occur as the sleeve joint is pressed onto the pipe by tightening the counter-threaded ring nut onto the threaded end.

Also, in case of water hammers or pulling forces, the pipe tends to slip off from the connection in which it is fitted, and to drag along the annular member with which it is associated and also the main body of elastomeric material, which comes off the edge of the threaded end, thereby affecting fluid tightness.

Document EP 0 611 909 A1 discloses a sleeve joint according to the preamble of claim 1.

### Summary of the invention

A main object of the present invention is to overcome the above drawbacks, by providing a sleeve joint for connection of a pipe to a threaded end using a counter-threaded ring nut that is highly efficient and relatively cost-effective.

A particular object is to provide a sleeve joint that provides an optimal mechanical holding action, when pressed upon the pipe by tightening of the counter-threaded ring nut onto the threaded end.

A further object is to provide a sleeve joint that does not weaken and/or cut into the whole circumference of the pipe on which it is pressed.

Yet another object is to provide a sleeve joint that ensures optimal fluid tightness and mechanical holding even in case of water hammers and/or pulling forces.

These and other objects, as better explained hereinafter, are fulfilled by a sleeve joint for connection of a smooth pipe with a threaded end using a counter-threaded ring nut in accordance with claim 1, and an assembly according to claim 10.

Advantageous embodiments of the invention are defined in accordance with the dependent claims.

### Brief description of the drawings

Further features and advantages of the invention will be more apparent upon reading the detailed description of a preferred, non-exclusive embodiment of a sleeve joint of the invention, which is described by way of a non-limiting example with the help of the annexed drawings, in which:
FIG. 1 is an axonometric view of a first embodiment of the sleeve joint of the invention, whose teeth 5, 5', 5" embedded in the tubular body 2 are indicated by dashed lines;
FIG. 2 is an axonometric exploded view of the first embodiment of the sleeve joint as shown in Figure 1;
FIG. 3 is a sectional view of the first embodiment of the sleeve joint as shown in Fig. 1;
FIG. 4 is a top view of the annular member as shown in Figure 1;
FIG. 5 is a sectional view of the annular member as shown in Figure 4, as taken along a plane V-V;

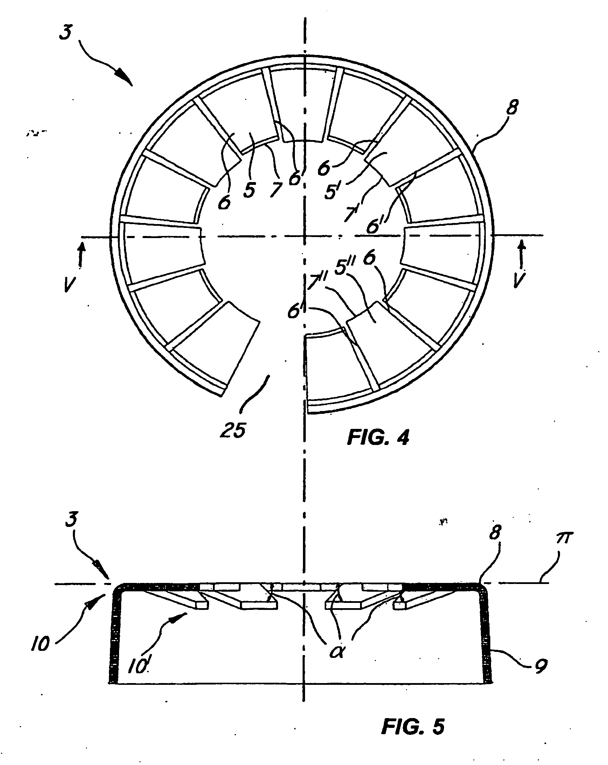

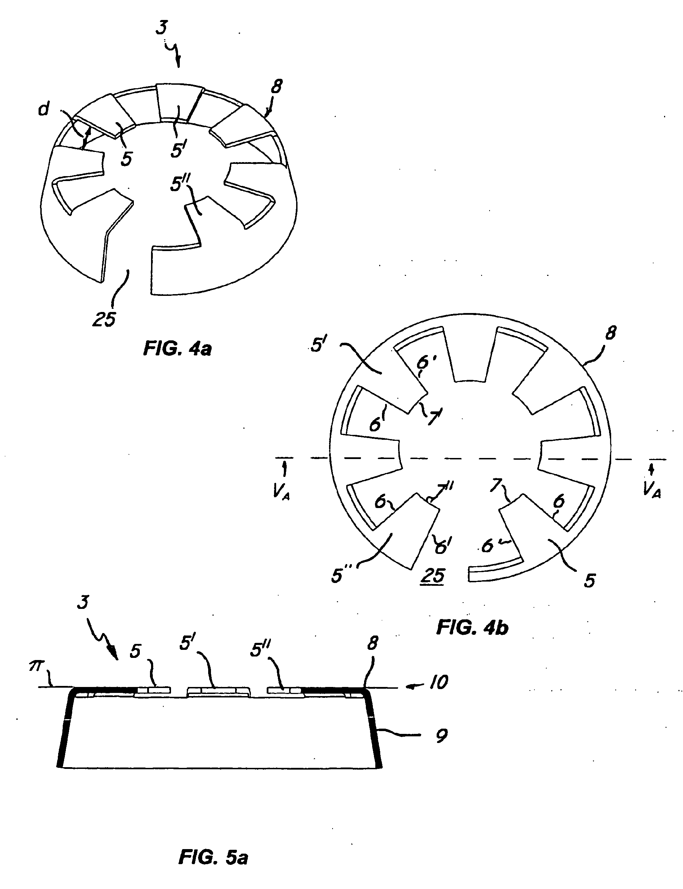

FIG. 4a is an axonometric view of another embodiment of the annular member 3;
FIG. 4b is a top view of the annular member 3 as shown in Figure 4a;
FIG. 5a is a sectional view of the annular member 3 as shown in Figure 4a, as taken along a plane Va-Va;

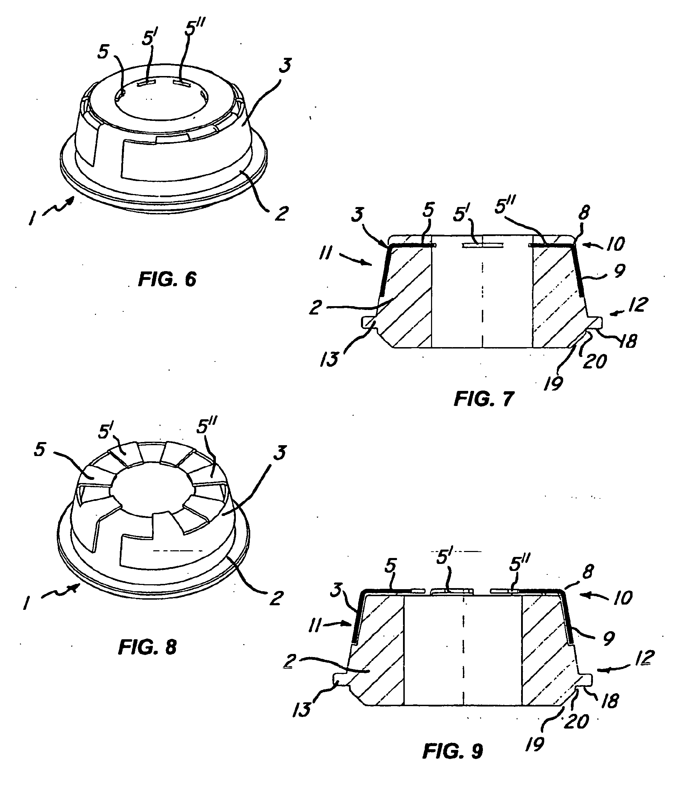

FIG. 6 is an axonometric view of a second embodiment of the sleeve joint of the invention, including the annular member 3 as shown in Fig.4a, 4b and 5a;
FIG. 7 is a sectional view of the second embodiment of the sleeve joint as shown in Fig. 6;
FIG. 8 is an axonometric view of a third embodiment of the sleeve joint of the invention, including the annular member 3 as shown in Fig. 4a, 4b and 5a;
FIG. 9 is a sectional view of the third embodiment of the sleeve joint as shown in Fig. 8;

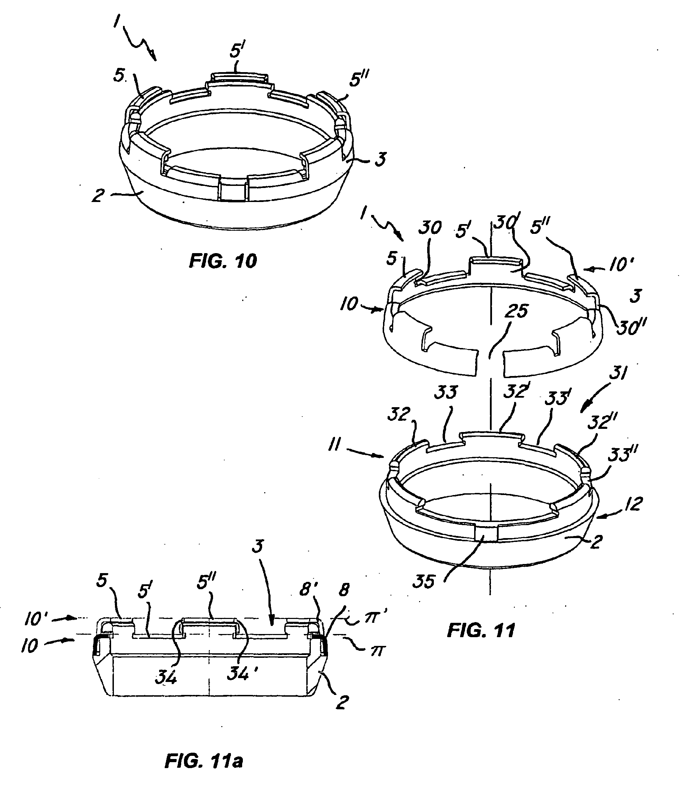

FIG. 10 is an axonometric view of a fourth embodiment of the sleeve joint of the invention;
FIG. 11 is an exploded view of the fourth embodiment of the sleeve joint as shown in Fig. 10;
FIG. 11a is a sectional view of the fourth embodiment of the sleeve joint as shown in Fig. 10;

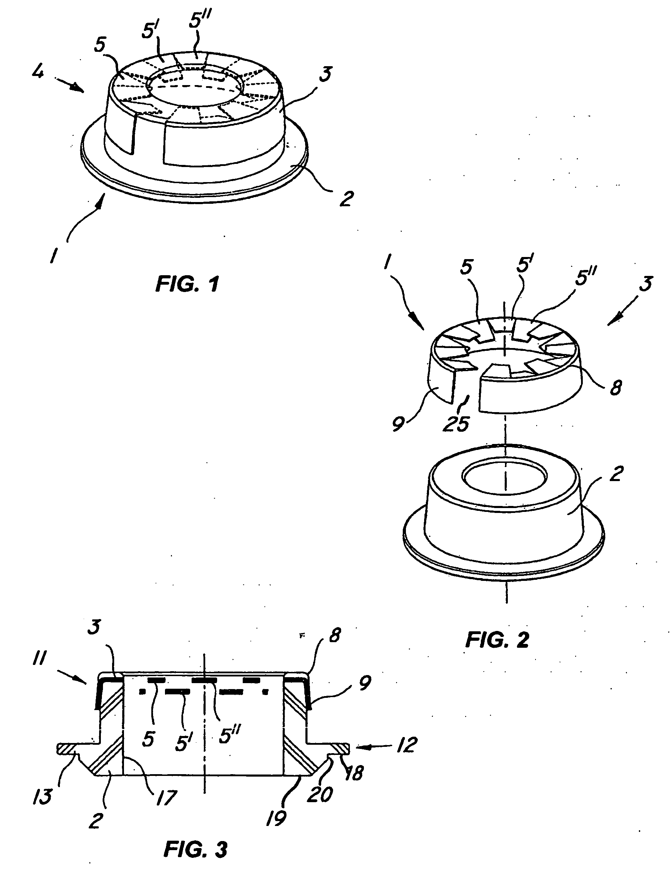

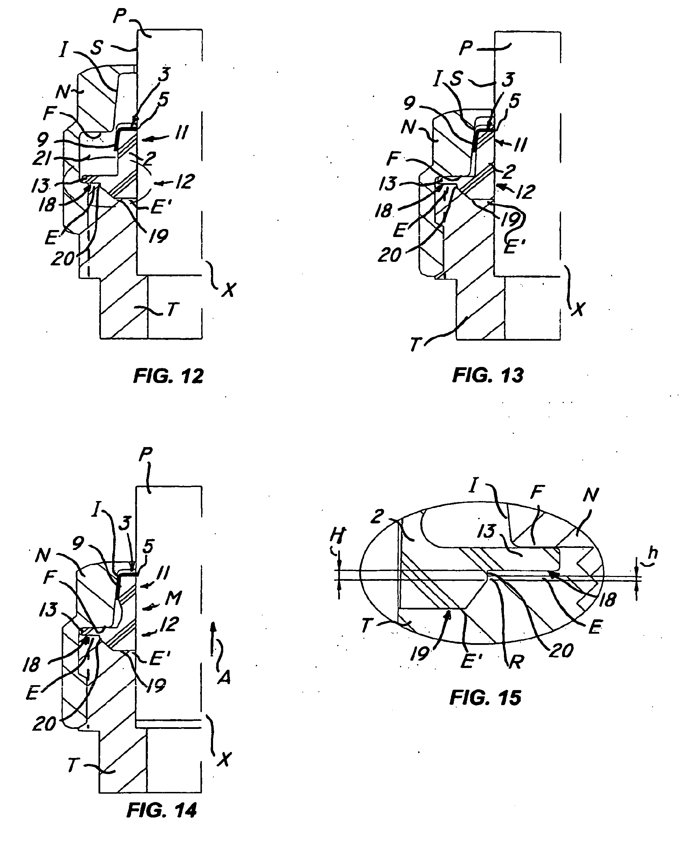

FIGS. 12 to 14 are sectional views of some steps of use of the first embodiment of the sleeve joint as shown in Fig. 1;
FIG. 15 is an enlarged view of certain details of FIG. 12.

### Detailed description of several preferred embodiments

Referring to the above Figures, the sleeve joint of the invention, generally designated by numeral 1, may be advantageously used for connection of a pipe P, particularly of the type having a smooth outer surface S, to a threaded end T, e.g.of a plumbing system, using a counter-threaded ring nut N. Both the pipe P and the end T and the ring nut N may be of standard type and know per se.

The sleeve joint 1 will essentially comprise a tubular body 2 of elastomeric material designed to be interposed between the ring nut N and the pipe T, and an annular member 3 of rigid material, coaxial with the main body 2. Preferably, but not exclusively, the rigid material of the annular member 3 is a metal material and may be selected from the group consisting of aluminum, brass, steel,according to the requirements. Nonetheless, it shall be understood that any other rigid material may be used, either of metal or polymer type, without departure from the inventive scope as defined in the annexed claims.

The tubular body 2 may have a substantially cylindrical, or substantially conical shape, as shown in Fig.10, 11 and 11a, depending on the shape of the end T with which it is to be connected.

Advantageously, the rigid material may be selected according to the material that forms the pipe P with which the annular member 3 is designed to engage. Thus, the rigid base material that forms the annular member 3 may be more rigid than the base material that forms the pipe P, to ensure a proper mechanical holding action thereon.

Suitably, the elastomeric material that forms the tubular body 2 may be NBR or EPDM, and may have a Shore hardness from 70 to 90.

The annular member 3 comprises anchor means 4 which include a plurality of radially inwardly directed laminar teeth 5, 5', 5"..., adapted to anchor the unit assembly of the main body 2 and the annular member 3 to the pipe P, as shown in Fig. 12 to 14.

Thus, once the ring nut N has been screwed onto the end T, the laminar teeth 5, 5', 5'' will engage part of the outer surface S of the pipe P, thereby ensuring a proper mechanical holding action against movement of the pipe P relative to the end T of either rotational or translational type or both types.

Thanks to this particular configuration, the sleeve joint of the invention ensures an excellent mechanical holding action against relative motion of the pipe and the threaded end, which prevents the typical slipping effects of prior art sleeve joints.

This configuration also prevents the sleeve joint of the invention from weakening the pipe surface whereupon it is pressed.

The tubular body 2 has a first end portion 11, with the laminar teeth 5, 5', 5'', ... embedded therein, and a second end portion 12, which is susceptible of cooperation with the threaded end T. The first portion 11 and the second portion 12 are integrally joined together, to form a unitary member.

According to the invention, the second longitudinal portion 12 includes a radial annular appendix 13, as shown in Figures 1 to 9 and 12 to 15. Such appendix has a planar surface 18 for contact with the planar end portion E of the end T, to increase fluid tightness between the latter and the pipe P.

Primary fluid tightness between the sleeve joint 1 and the threaded end T is ensured by the specially shaped surface 19 of the longitudinal portion 12 of the body 2, which is designed to be pressed onto the end portion E' of the threaded end T, as described in greater detail hereafter. A substantially cylindrical annular step 20 may be interposed between the surface 18 and the surface 19, to accomplish a function as described below.

It shall be understood that the body 2 and the annular member 3 may be coupled in any manner, without departure from the inventive scope as defined by the contents of the annexed claims.

In the preferred, non exclusive embodiments of the invention as shown in Figures 1, 2, 3, 6 and 7, for instance, the laminar teeth 5, 5', 5'' are integrally embedded in the main elastomeric body 2, thereby allowing it to form a solid piece with the annular member 3.

On the other hand, in the preferred, non exclusive embodiment of the invention, as shown in Figures 8, 9, 10, 11 and 11a, the annular member 3 may be integrally fitted onto a previously molded tubular elastomeric body 2. The latter is suitably shaped for integral and stable coupling with the laminar teeth 5, 5', 5'', ..., as described hereafter. Particularly, in these embodiments the annular member 3 may be interlocked and/or glued to the body 2.

Various embodiments of the annular member 3 are further shown in the accompanying figures.

For example, in the embodiment of Figures 4 and 5, the annular member 3 has two annular arrays 10, 10' of alternate, non parallel laminar teeth 5, 5', 5''..., as better explained below.

In the embodiment of Figures 4a, 4b and 5a, the annular member 3 has one annular array 10 of laminar teeth 5, 5', 5''... spaced by a constant or varying distance d.

Advantageously, in these embodiments the laminar teeth 5, 5', 5"... have a substantially trapezoidal planar shape, with substantially radial inclined sides 6, 60 and inner ends 7, 7', 7''. The laminar teeth 5, 5', 5'',... extend from a circular peripheral edge 8 of the annular member 3, which is of open type to allow radial elastic deformability and may have a gap 25 therein. The circular edge 8 further delimits a substantially conical wall 9 which is designed to be placed at the periphery of the main body 2. Thus, by screwing the ring nut N onto the end T, the conical wall 9 of the annular member 3 will be elastically deformed in the radial direction and the laminar teeth 5 , 5' , 5''... will be engaged with the surface S of the pipe P.

In the embodiment of Figure 1, the laminar teeth 5, 5', 5''... have different inclinations with respect to the plane π defined by the circular edge 8. These laminar teeth 5, 5', 5''... are arranged along two concentric annular arrays 10, 10', wherein the teeth of the first array 10 are all on the same plane, parallel to the plane π, and the teeth of the second array 10' have the same inclination to the same plane π, and form an angle α therewith.

Furthermore, in the embodiment of Figure 11, the annular member 3 has two annular arrays 10, 10' of alternate and parallel laminar teeth 5, 5', 5''..., as better explained below. It will be understood that the laminar teeth are designated with numerals 5, 5',5" regardless of whether they are disposed along one annular array or two or more annular arrays.

For this purpose, the annular member 3 has two concentric annular arrays 10, 10' of alternate and spaced laminar teeth 5, 5', 5".... The first annular array 10 of radially and inwardly directed laminar teeth 5, 5' , 5"..., extends from a first circular peripheral edge 8 of the annular member 3 and will be all substantially on the same plane, parallel to a plane π defined by such edge 8. The second annular array 10' of radially and inwardly directed laminar teeth 5, 5', 5''... extend from a second circular peripheral edge 8' defined by the tips of a circular array of elongate appendixes 30, 30', 30''..., all of equal height and alternating with the laminar teeth 5, 5', 5'' of the first array, axially extending from the first edge 8.

The second circular edge 8' also defines a second plane π' parallel to the plane π defined by the first edge 8. The laminar teeth 5, 5', 5" ... of the second array 10' are coplanar with each other and with the plane π'. As a result, the laminar teeth 5, 5', 5'' ... of both arrays 10, 10' are substantially parallel to each other.

The tubular body 2 has a top peripheral edge 31 of the end portion 11 that is suitably shaped complementarily to the annular member 3 for interlocking connection therewith. For this purpose, the edge 31 has an array of respective elongate appendages 32, 32', 32'', ... all of the same length h₁, alternating with respective recesses 33, 33', 33'', ....

The elongate appendixes 32, 32', 32", ... and the recesses 33, 33', 33", ... are shaped complementarily to the laminar teeth 5, 5', 5", ... of the two arrays 10, 10', so that, when the annular member 3 is fitted onto the body 2, the laminar teeth 5, 5', 5'', ... of the first array 10 will be received in the recesses 33, 33', 33'', ..., and the laminar teeth 5, 5', 5", ... of the second array 10' will be received in the appendixes 32, 32' , 32''... .

Each of the latter further has respective stop members 34, 34' for axially retaining the laminar teeth 5, 5', 5''... of the first array 10 when these are received in their respective recesses 33, 33' , 33''.... For the annular member 3 to be well centered, the tubular body 2 has a further stop member 35 adapted for engagement wit the gap 25 of the annular member 3.

As far as construction is concerned, the annular member 3 may be formed from a laminar metal strip that is sheared and drawn using a progressive die with interchangeable cylindrical die and punch blocks for each diameter of the annular member 3, without any further processing, for simple and cost-effective fabrication.

In one preferred, non exclusive embodiment, as shown in Figures 12 to 14, the ring nut N may have an annular recess 21 for retaining the sleeve joint 1 therein and preventing its release as it is fitted on the pipe P. Therefore, this embodiment allows simple and immediate installation of the sleeve joint 1 on the pipe P.

Figure 12 to 14 show the operation of the first embodiment of the present sleeve joint. It shall be understood that, while the operation of the sleeve joint 1 has been shown with reference to such first embodiment only, the other embodiments will also operate in substantially the same manner. The threads of the threaded end is indicated therein by dashed lines.

Figure 12 shows a first operating step of connection of the pipe P to the threaded end T, with the ring nut N at the start of the threads of the end T. The pipe P, is fitted to the inner surface 17 of the sleeve joint 1 and is also introduced in the threaded end T. The counter-threaded ring nut N is placed at the periphery of the outer surface S of the pipe P, to be screwed onto the threads of the end T. It can be seen that the planar surface F of the ring nut N faces towards the top surface of the radial appendage 13, and the inclined surface I of the ring nut N is aligned with the conical wall 9 of the annular member 3. The specially shaped surface 19 abuts against the portion E' of the threaded end T, whereas the planar surface 18 is slightly spaced from the portion E thanks to the step 20, as shown in Figure 15. As particularly shown in this figure, the step 20 has a height H that is slightly greater than the height h of the stop member R located between the portions E and E' of the threaded end T.

Figure 13 shows a second operating step of connection of the pipe P to the threaded end T, in which the ring nut N is fully tightened onto the threads of the end T. In this step, the surface I of the ring nut N applies pressure to the wall 9 of the annular member 3, thereby causing radial deformation of the latter and ensuring a mechanical holding action by the teeth 5, 5', 5'' on the outer surface S of the pipe P. The planar surface F further contacts the top surface of the radial appendage 13, so that the surfaces 18 and 19 are pressed against the portions E and E' of the terminal T respectively, thereby ensuring fluid tightness. Also, the pressure exerted by the ring nut N causes axial compression of the step 20, which is pressed against the end T, and hence improves fluid tightness.

Therefore, even in the second embodiment of the sleeve joint 1, the ring nut N exerts separate compressive stresses. Its planar surface F presses the radial appendix 14 against the planar end E of the threaded end T, thereby ensuring excellent seal tightness in the axial direction. On the other hand, its inclined surface I presses the annular member 3 and hence the laminar teeth 5, 5', 5'' against the surface S of the pipe P, thereby providing an excellent mechanical holding action.

Figure 14 shows a third operating step of connection of the pipe P to the threaded end T, with the ring nut N still at the end of the threads of the end T and the pipe P is under tension. In this case, the pipe P will be translated along the axis X towards the arrow A and drag along the teeth 5, 5', 5'' ... of the annular member 3, as well as the first end portion 11 of the tubular member 2. The axial motion of the pipe P will have no effect on the pressure that the planar surface F of the ring nut N exerts on the radial appendage 13, which will still ensure fluid tightness in its original position.

Then, upon translation of the pipe P, the tubular elastomeric body 2 will be elastically deformed, its section being narrowed at its median portion M, as shown in Figure 14.

Again, in this second embodiment, any undesired axial motion of the pipe has a favorable effect on the mechanical holding action of the annular member 3 on the surface S of the pipe. The latter will move integrally with the pipe in the direction of arrow A, sliding along the inclined plane defined by the inclined surface I of the ring nut N (which will not move), thereby increasing pressure on the conical wall 9 and the elastic deformation effect of the annular member 3, and consequently increasing the mechanical holding action thereof. At the same time, the conical wall 9 will further press the end portion 11 of the tubular body 2 against the outer surface S of the pipe P, thereby ensuring secondary fluid tightness.

The above disclosure clearly shows that the invention fulfils the intended objects, and particularly meets the requirement of providing a sleeve joint that provides an optimal mechanical holding action, when pressed upon the pipe by tightening of the counter-threaded ring nut onto the threaded end.

The laminar teeth 5, 5', 5" ... which are susceptible of engaging the outer surface of the pipe P allow exertion of a mechanical holding action thereon against any relative motion of the pipe P and the threaded end T.

The sleeve joint of this invention is susceptible of a number of modifications and changes falling within the scope defined in the appended claims.

While the sleeve joint has been described with particular reference to the accompanying figures, the numerals referred to in the disclosure and claims are only used for the sake of a better intelligibility of the invention and shall not be intended to limit the claimed scope in any manner.

## Claims

1. A sleeve joint for connecting a smooth pipe (P) with a threaded end (T) having a planar end portion (E) using a counter-threaded ring nut (N) having a planar surface (F) susceptible to be faced to the planar end portion (E) of the threaded end (T) during use, the sleeve joint comprising:
- a tubular body (2) of elastomeric material, which is designed to be interposed between the ring nut (N) and the pipe (P);
- an annular member (3) of rigid material having means (4) for anchoring thereof to the outer surface (S) of the pipe (P), said annular member being substantially coaxial with said tubular body (2) and open at least at one gap (25) thereof to allow radial elastic deformation upon the screwing of the ring nut (N) onto the threaded end (T),
wherein said anchor means (4) include a plurality of radially inwardly directed laminar teeth (5, 5', 5", ...) extending from at least one first peripheral circular edge (8) of said annular member (3) for engaging the outer surface of the pipe (P) to exert a mechanical holding action thereon against any relative motion of the pipe (P) and the threaded end (T),
wherein said tubular body (2) of elastomeric material has a first longitudinal end portion (11) with which said annular member (3) is coupled, and a second longitudinal end portion (12), which is susceptible of cooperation with the threaded end (T), wherein
said annular member (3) is integrally coupled to said tubular body (2), **characterized in that** said second longitudinal portion (12) of said tubular body (2) comprises a radial annular appendix (13) which is susceptible to be interposed between the planar end portion (E) of the threaded end (T) and the planar surface (F) of the counter-threaded ring nut (N) for contacting the planar end portion (E) of the threaded end (T) upon the screwing of the ring nut (N) onto the threaded end (T), thereby ensuring fluid tightness between the latter and the pipe (P).

2. Sleeve joint as claimed in claim 1, wherein said laminar teeth (5, 5' , 5"...) are all substantially coplanar with respect to the plane (π) defined by said at least one first peripheral circular edge (8) of said annular member (3) and are disposed along an annular array (10).

3. Sleeve joint as claimed in claims 1, wherein said laminar teeth (5, 5', 5"...) are arranged along at least two concentric annular arrays (10, 10').

4. Sleeve joint as claimed in claim 3, wherein said laminar teeth (5, 5', 5"...) all extend from said at least one first peripheral circular edge (8), the teeth (5, 5', 5"...) of a first array (10) being substantially coplanar with each other and parallel to said plane (π), the teeth (5, 5', 5"...) of said second array (10') having all the same inclination(α)relative to the same plane (π).

5. Sleeve joint as claimed in claim 4, wherein said laminar teeth (5, 5', 5"...) also extend from a second peripheral circular edge (8') of said annular member (3) substantially parallel to said first edge (8), the teeth (5, 5', 5"...) of a first array (10) being substantially coplanar with each other and parallel to said plane (π), the teeth (5, 5', 5"...) of said second array (10') being substantially coplanar with each other and parallel to a second plane (π') defined by said second peripheral circular edge (8).

6. Sleeve joint as claimed in claim 4 or 5, wherein the laminar teeth (5, 5', 5"...) of said first and said second arrays (10, 10') are arranged in alternate relationship along substantially the whole circumferential extension of said annular member (3).

7. Sleeve joint as claimed in any one of claims 1 to 6, wherein said laminar teeth (5, 5', 5"...) of said annular member (3) are integrally embedded in said main elastomeric body (2).

8. Sleeve joint as claimed in any one of claims 1 to 7, wherein said annular member (3) is integrally fitted onto said main elastomeric body (2), the latter being possibly shaped complementarily to said annular member (3) for interlocking connection therewith.

9. Sleeve joint as claimed in any one of claims 1 to 8, wherein said annular member (3) is formed of a metal sheet material.

10. An assembly for connecting a smooth pipe (P) with a threaded end (T) having a planar end portion (E), the assembly comprising:
- a counter-threaded ring nut (N) having a planar surface (F) susceptible to be faced to the planar end portion (E) of the threaded end (T) during use
- a sleeve joint (1) coupled to said ring nut (N),
**characterized in that** said sleeve joint (1) is the sleeve joint (1) according to any one of the claims 1 to 9.

11. Assembly as claimed in claim 10, wherein said counter-threaded ring nut (N) comprises an annular recess (21) for retaining said sleeve joint (1) therein and preventing its release as it is fitted onto the pipe (P).

## Patentansprüche

1. Muffenverbindung zum Verbinden eines glatten Rohrs (P) mit einem mit Gewinde versehenen Ende (T), das einen planen Endabschnitt (E) aufweist, unter Benutzung einer mit Gegengewinde versehenen Ringmutter (N), die eine plane Fläche (F) aufweist und dazu geeignet ist, dem planen Endabschnitt (E) des mit Gewinde versehenen Endes (T) im Gebrauch gegenüber zu liegen, die Muffenverbindung umfassend:
- einen röhrenförmigen Körper (2) aus Elastomermaterial, der dazu gestaltet ist, zwischen der Ringmutter (N) und dem Rohr (P) eingelegt zu sein;
- ein ringförmiges Glied (3) aus starrem Material mit Mitteln (4) zum Verankern desselben an der Außenfläche (S) des Rohrs (P), wobei das ringförmige Glied im Wesentlichen koaxial mit dem röhrenförmigen Körper (2) und zumindest an einem Spalt (25) davon offen ist, um radiale elastische Verformung nach dem Aufschrauben der Ringmutter (N) auf das mit Gewinde versehene Ende (T) zu ermöglichen,
wobei die Verankerungsmittel (4) mehrere radial einwärts gerichtete Lamellenzähne (5, 5', 5", ...) enthalten, die sich von zumindest einer kreisförmigen Umfangskante (8) des ringförmigen Glieds (3) zum Ineingriffnehmen der Außenfläche des Rohrs (P) erstrecken um darauf eine mechanische Haltewirkung gegen eine relative Bewegung des Rohrs (P) und des mit Gewinde versehene Endes (T) auszuüben
wobei der röhrenförmige Körper (2) aus Elastomermaterial einen ersten längsgerichteten Endabschnitt (11), mit dem das ringförmige Glied (3) verkuppelt ist, und einen zweiten, längsgerichteten Endabschnitt (12) aufweist, der zum Zusammenwirken mit dem mit Gewinde versehenen Ende (T) geeignet ist,
wobei das ringförmige Glied (3) an den röhrenförmigen Körper (2) vollständig gekuppelt ist, **dadurch gekennzeichnet, dass** der zweite, längsgerichtete Abschnitt (12) des röhrenförmigen Körpers (2) einen radialen ringförmigen Zusatz (13) umfasst, der dazu geeignet ist, zwischen den planen Endabschnitt (E) des mit Gewinde versehenen Endes (T) und die plane Fläche (F) der mit Gewinde versehenen Ringmutter (N) eingelegt zu sein, um den planen Endabschnitts (E) des mit Gewinde versehenen Endes (T) beim Aufschrauben der Ringmutter (N) auf das mit Gewinde versehenen Ende (T) zu berühren, wodurch die Flüssigkeitsdichtigkeit zwischen dem Letzteren und dem Rohr (P) gewährleistet ist.

2. Muffenverbindung nach Anspruch 1, wobei die Lamellenzähne (5, 5', 5 ", ...) alle im Wesentlichen komplanar bezüglich der Ebene (n), die durch die zumindest eine erste kreisförmige Umfangskante (8) des ringförmigen Glieds (3) definiert ist, und entlang einer ringförmigen Gruppierung (10) angeordnet sind.

3. Muffenverbindung nach Anspruch 1, wobei die Lamellenzähne (5, 5', 5 ", ...) entlang von zumindest zwei konzentrischen ringförmigen Gruppierungen (10, 10') angeordnet sind.

4. Muffenverbindung nach Anspruch 3, wobei sich die Lamellenzähne (5, 5', 5", ...) von der zumindest einen ersten kreisförmigen Umfangskante (8) erstrecken, wobei die Zähne (5, 5', 5 ", ...) der ersten Gruppierung (10) im Wesentlichen komplanar miteinander und parallel zu der Ebene (n) sind, wobei die Zähne (5, 5', 5", ...) der zweiten Gruppierung (10') alle dieselbe Neigung (α) bezüglich derselben Ebene (n) aufweisen.

5. Muffenverbindung nach Anspruch 4, wobei sich die Lamellenzähne (5, 5', 5", ...) außerdem von einer zweiten kreisförmigen Umfangskante (8') des ringförmigen Glieds (3) erstrecken, wobei die Zähne (5, 5', 5", ...) einer ersten Gruppierung (10) im Wesentlichen komplanar miteinander und parallel zu der Ebene (n) sind, wobei die Zähne (5, 5', 5", ...) der zweiten Gruppierung (10') im Wesentlichen komplanar miteinander und parallel zu einer zweiten Ebene (π') sind, die durch die zweite kreisförmige Umfangskante (8') definiert ist.

6. Muffenverbindung nach einem der Ansprüche 4 oder 5, wobei die Lamellenzähne (5, 5', 5 ", ...) der ersten und zweiten Gruppierung (10, 10') in abwechselnder Beziehung entlang im Wesentlichen der gesamten Umfangsausdehnung des ringförmigen Glieds (3) angeordnet sind.

7. Muffenverbindung nach einem der Ansprüche 1 bis 6, wobei die Lamellenzähne (5, 5', 5", ...) des ringförmigen Glieds (3) vollständig in den Elastomerhauptkörper (2) eingelassen sind.

8. Muffenverbindung nach einem der Ansprüche 1 bis 7, wobei das ringförmige Glied (3) auf den Elastomerhauptkörper (2) vollständig aufgebracht ist, wobei der Letztere möglicherweise zu dem ringförmigen Glied (3) zur ineinandergreifenden Verbindung damit ergänzend geformt ist.

9. Muffenverbindung nach einem der Ansprüche 1 bis 8, wobei das ringförmige Glied (3) aus einem Blechtafelmaterial ausgebildet ist.

10. Einheit zum Verbinden eines glatten Rohrs (P) mit Gewinde versehenen Ende (T), das einen planen Endabschnitt (E) aufweist, die Anordnung umfassend:
- eine mit Gewinde versehenen Ringmutter (N), die eine plane Fläche (F) aufweist, die dazu geeignet ist, dem planen Endabschnitt (E) des mit Gewinde versehenen Endes (T) im Gebrauch gegenüber zu liegen,
- eine Muffenverbindung (1), die an die Ringmutter (N) gekuppelt ist,
**dadurch gekennzeichnet, dass** die Muffenverbindung (1) die Muffenverbindung (1) nach irgendeinem der Ansprüche 1 bis 9 ist.

11. Einheit nach Anspruch 10, wobei die mit Gewinde versehenen Ringmutter (N) eine ringförmige Aussparung (21) zum Halten der Muffenverbindung (1) darin und zum Verhindern ihrer Freigabe, wenn sie auf das Rohr (P) aufgebracht ist, umfasst.

## Revendications

1. Un joint à manchon pour raccorder une conduite lisse (P) avec une extrémité filetée (T) présentant une partie d'extrémité planaire (E) utilisant un écrou annulaire contre-fileté (N) présentant une surface planaire (5) susceptible d'être mise face à la partie d'extrémité planaire (E) de l'extrémité fileté (T) pendant l'utilisation, le joint à manchon comprenant :
- un corps tubulaire (2) en matériau élastomère qui est conçu pour être intercalé entre l'écrou annulaire (N) et la conduite (P) ;
- un élément annulaire (3) en matériau rigide comprenant un moyen (4) d'ancrage de celui-ci à la surface extérieure (S) de la conduite (P), ledit élément annulaire étant sensiblement coaxial avec ledit corps tubulaire (2) et ouvert au moins sur une interruption (25) de celui-ci pour permettre une déformation élastique radiale lorsque l'on visse l'écrou annulaire (N) sur l'extrémité filetée (T),
dans lequel ledit moyen d'ancrage (4) comprend une pluralité de dents laminaires (5, 5', 5 ", ...) dirigées radialement vers l'intérieur, s'étendant depuis au moins un premier bord circulaire périphérique (8) dudit élément annulaire (3) pour engager la surface extérieure de la conduite (P) au fin d'exercer une action de retenue mécanique sur celle-ci contre tout mouvement relatif de la conduite (P) et de l'extrémité filetée (T),
dans lequel ledit corps tubulaire (2) en matériau élastomère présente une première partie d'extrémité longitudinale (11) avec laquelle ledit élément annulaire (3) est couplé, et une deuxième partie d'extrémité longitudinale (12) qui est susceptible de coopérer avec l'extrémité filetée (T), dans lequel
ledit élément annulaire (3) est couplé intégralement audit corps tubulaire (2), **caractérisé en ce que** ladite deuxième partie longitudinale (12) dudit corps tubulaire (2) comprend un appendice annulaire radial (13) qui est susceptible d'être intercalé entre la partie d'extrémité planaire (E) de l'extrémité filetée (T) et la surface planaire (F) de l'écrou annulaire contre-fileté (N) pour se mettre en contact avec la partie d'extrémité planaire (E) de l'extrémité filetée (T) lorsque l'on visse l'écrou annulaire (N) sur l'extrémité filetée (T), assurant ainsi une étanchéité de fluide entre cette dernière et la conduite (P).

2. Joint à manchon selon la revendication 1, dans lequel lesdites dents laminaires (5, 5', 5", ...) sont toutes sensiblement coplanaires par rapport au plan (n) défini par ledit au moins un premier bord circulaire périphérique (8) dudit élément annulaire (3) et sont disposées le long d'un rang annulaire (10).

3. Joint à manchon selon la revendication 1, dans lequel lesdites dents laminaires (5, 5', 5", ...) sont agencées le long au moins de deux rangs annulaires concentriques (10, 10').

4. Joint à manchon selon la revendication 3, dans lequel lesdites dents laminaires (5, 5', 5", ...) s'étendent toutes depuis ledit au moins un premier bord circulaire périphérique (8), les dents (5, 5', 5 ", ...) d'un premier rang (10) étant sensiblement coplanaires l'une avec l'autre et parallèles audit plan (π), les dents (5, 5', 5'', ...) dudit deuxième rang (10') ayant toute la même inclinaison (α) par rapport au même plan (π).

5. Joint à manchon selon la revendication 4, dans lequel lesdites dents laminaires (5, 5', 5", ...) s'étendent également depuis un deuxième bord circulaire périphérique (8') dudit élément annulaire (3) sensiblement parallèle audit premier bord (8), les dents (5, 5', 5", ...) d'un premier rang (10) étant sensiblement coplanaires l'une avec l'autre et parallèles audit plan (n), les dents (5, 5', 5", ...) dudit deuxième rang (10') étant sensiblement coplanaires l'une avec l'autre et parallèles à un deuxième plan (n') défini par ledit deuxième bord circulaire périphérique (8').

6. Joint à manchon selon la revendication 4 ou 5, dans lequel lesdites dents laminaires (5, 5', 5", ...) desdits premier et deuxième rangs (10, 10') sont disposées en relation alternante le long sensiblement de toute l'extension circonférentielle dudit élément annulaire (3).

7. Joint à manchon selon l'une quelconque des revendications 1 à 6, dans lequel lesdites dents laminaires (5, 5', 5", ...) dudit élément annulaire (3) sont intégrée dans ledit corps élastomère principal (2).

8. Joint à manchon selon l'une quelconque des revendications 1 à 7, dans lequel ledit élément annulaire (3) est inséré intégralement sur ledit corps élastomère principal (2), ce dernier étant éventuellement formé de manière complémentaire audit élément annulaire (3) pour être raccordé par interverrouillage à celui-ci.

9. Joint à manchon selon l'une quelconque des revendications 1 à 8, dans lequel ledit élément annulaire (3) est formé d'un matériau de feuille métallique.

10. Une ensemble pour raccorder une conduite lisse (P) avec une extrémité filetée (T) présentant une partie d'extrémité planaire (E), l'ensemble comprenant:
- un écrou annulaire contre-fileté (N) ayant une surface planaire (5) susceptible d'être mise face à la partie d'extrémité planaire (E) de l'extrémité fileté (T) pendant l'utilisation,
- un joint à manchon (1) couplé audit écrou annulaire (N),
**caractérisé en ce que** ledit joint à manchon (1) est le joint à manchon (1) selon l'une quelconque des revendications 1 à 9.

11. Ensemble selon la revendication 10, dans lequel ledit écrou annulaire contre-fileté (N) comprend un creux annulaire (21) pour retenir ledit joint à manchon (1) à l'intérieur de celui-ci et éviter son perte lorsqu'il est inséré sur la conduite (P).
